# EUROPÄISCHE PATENTSCHRIFT

(11) **EP 3 341 109 B1**
(45) Veröffentlichungstag und Bekanntmachung des Hinweises auf die Patenterteilung: **10.03.2021**
(21) Anmeldenummer: 16750624.5
(22) Anmeldetag: 10.08.2016
(51) Int. Cl.: B01D 46/24, B01D 45/08, B01D 45/16, B01D 46/00, B01D 50/00

(54) **ABSCHEIDEVORRICHTUNG**
SEPARATING DEVICE
DISPOSITIF DE SÉPARATION

(30) Priorität: 27.08.2015 DE 102015011225
(43) Veröffentlichungstag der Anmeldung: 04.07.2018
(73) Patentinhaber: RT-Filtertechnik Gmbh, 88048 Friedrichshafen (DE)
(72) Erfinder: OBERLI, Frank, 8193 Eglisau (CH); STEICHE, Andreas, 07629 Hermsdorf (DE); KESSEL, Robert, 07646 Schöngleina (DE)
(74) Vertreter: Bartels und Partner, Patentanwälte
(86) Internationale Anmeldenummer: PCT/EP2016/001377
(87) Internationale Veröffentlichungsnummer: WO 2017/032447

(56) Entgegenhaltungen:
- AT-A- A 635 273
- CA-A- 891 035
- GB-A- 517 206
- US-A- 970 477
- US-A- 2 828 831
- US-A- 2 998 100

## Beschreibung

Die Erfindung betrifft eine Abscheidevorrichtung mit den Merkmalen im Oberbegriff von Anspruch 1.

Durch die DE 10 2010 014 278 A1 ist ein Zyklonabscheider zum Abscheiden von flüssigen und/oder festen Partikeln aus einem Gasstrom bekannt, aufweisend ein erstes Zyklonbauteil mit mindestens einem im Wesentlichen zylindrisch ausgebildeten Zellenrohr, das eine Leitvorrichtung aufweist, mittels derer der Gasstrom zum Abscheiden der Partikel in Rotation versetzbar ist. Ferner weist die bekannte Lösung einen Partikelauslass auf zum Ableiten der abgeschiedenen Partikel aus der Vorrichtung sowie ein der Strömungsrichtung des Gasstroms folgendes zweites Zyklonbauteil mit mindestens einem Tauchrohr, das im Zellenrohr aufgenommen ist und an seinem der Strömungsrichtung des Gasstroms folgenden abströmseitigen Ende mit dem der Strömungsrichtung des Gasstroms folgenden abströmseitigen Ende des Zellenrohrs zumindest bereichsweise verbunden ist, sowie einen zentralen Auslass zum Auslassen des gereinigten Gasstroms.

Vorteilhafterweise ist dieser bekannte Zyklonabscheider als sog. Vielzellenzyklon ausgebildet, bei dem das erste Zyklonbauteil eine Vielzahl an Zellenrohren und das zweite Zyklonbauteil eine Vielzahl an Tauchrohren aufweist. Mit der bekannten Lösung lassen sich aufgrund der Vielzellenzyklonbauweise bei gutem Wirkungsgrad die jeweiligen Feststoffe vom Mediengasstrom trennen; allein die dahingehende Bauweise ist aufwendig in der Realisierung und mithin kostenintensiv.

Durch die EP 2 471 588 A1 ist eine weitere Vorrichtung zur Abscheidung von Flüssigkeiten aus Gasen bekannt, umfassend einen Vorrichtungsbehälter mit einem Gaseinlass und einem Gasauslass sowie mit einem Abscheideelement, insbesondere in Form eines Luftentölelements, das im Strömungsweg zwischen dem Gaseinlass und dem Gasauslass angeordnet ist. Bei der bekannten Lösung ist ein Spiralabscheider mit nur einem Spiralarm in Form eines spiralförmig verlaufenden Strömungsgehäuses zwischen dem Gaseinlass und dem Abscheideelement angeordnet, wobei der dahingehende Spiralabscheider den Behälter in eine obere Kammer und eine untere Kammer unterteilt.

Die bekannte Vorrichtung vermeidet im Betrieb Aufwirbelungen innerhalb des strömenden Mediums und erlaubt eine kompakte Bauweise; allein was die Abscheideleistung an abzutrennender Flüssigkeit als Verschmutzung aus dem Gasmedienstrom anbelangt, lässt die bekannte Lösung noch Wünsche offen.

Die US 2 828 831 offenbart eine Abscheidevorrichtung zum Abscheiden von Verschmutzungen in Form von Feststoffen, aus einem gasförmigen Medienstrom, wie Luft, mit einem Spiralabscheider, der eine spiralförmig ausgebildete Leiteinrichtung aufweist, und einem hohlzylindrischen Filterelement, die in einem eine zylindrische Gehäuseinnenwand aufweisenden Gehäuse angeordnet sind, wobei der Medienstrom der Leiteinrichtung zuführbar ist und dadurch eine zumindest teilweise Abtrennung der jeweiligen Verschmutzung aus dem Medienstrom bewirkt, wobei die Leiteinrichtung mehrere Spiralarme aufweist, die paarweise einander benachbart gegenüberliegend radial verlaufende Strömungsräume derart begrenzen, dass der Medienstrom radial nach außen geführt, sich spiralförmig zu der Innenwand des Gehäuses bewegt, wobei die Abscheidevorrichtung derart eingerichtet ist, dass durch die Spiralführung der Medienstrom beschleunigt und an der Innenwand des Gehäuses in Richtung eines Medienaustritts weitergeleitet wird, dass dabei die Feststoffverschmutzung durch Reibung an der Innenwand des Gehäuses abgebremst und aus dem Gehäuse abgeschieden wird und dass die verbleibende Restluft dann durch das Filterelement weiter abgereinigt wird, und wobei das Filterelement in radialer Richtung gesehen einen vorgebbaren Abstand zu dem Gehäuse aufweist.

Die US 2011/138757 A1, die GB 517 206, die CA 891 035 A, die US 970 477, die US 2 998 100 und die AT A 635 273 offenbaren weitere Abscheidevorrichtungen.

Ausgehend von diesem Stand der Technik liegt der Erfindung die Aufgabe zugrunde, die bekannten Lösungen dahingehend weiter zu verbessern, dass eine Abscheidevorrichtung geschaffen ist, die Bauraum spart und sich kostengünstig realisieren lässt und bei hohen Abscheideleistungen dennoch funktionssicher im Betrieb ist.

Eine dahingehende Aufgabe löst eine Abscheidevorrichtung mit den Merkmalen des Patentanspruchs 1 in seiner Gesamtheit.

Gemäß dem Kennzeichen des Patentanspruchs 1 ist die erfindungsgemäße Abscheidevorrichtung dadurch gekennzeichnet, dass die einzelnen Spiralarme auf einer stirnseitigen Oberfläche einer darunterliegenden topfförmigen Aufnahme sitzen, in der das Filterelement aufgenommen ist, und dass der Spiralabscheider in radialer Richtung gesehen einen vorgebbaren Abstand zu dem Gehäuse aufweist.

Dadurch, dass die spiralförmig ausgebildete Leiteinrichtung für den Medienstrom mehrere, einzelne Spiralarme aufweist, die paarweise einander benachbart gegenüberliegend radial verlaufende Strömungsräume derart begrenzen, dass der Medienstrom nach außen geführt ist, ist aufgrund der Vielzahl an feststehenden, spiralförmigen Leitschaufeln des Spiralabscheiders eine hohe Abscheideleistung von Verschmutzungen aus dem gasförmigen Medienstrom in funktionssicherer Weise erreicht, wobei sich der Spiralabscheider darüber hinaus in kostengünstiger Weise und bauraumsparend realisieren lässt. Dies hat so keine Entsprechung im Stand der Technik.

Dadurch, dass mit vorgebbarem radialem Abstand ein Gehäuse den Spiralabscheider umgibt, können die durch die Spiralführung des Medienstroms mittels der Spiralarme der Leiteinrichtung aus dem Medienstrom abgetrennte Verschmutzungen in Form von Feststoffen sich am Innern dieses Gehäuses abscheiden.

Bei einer bevorzugten Ausführungsform der erfindungsgemäßen Abscheidevorrichtung ist vorgesehen, dass der Medienstrom in Form eines mit Verschmutzungen in Form von partikulären Feststoffen, wie staubbeladenen Gasstroms, gebildet aus Umgebungsluft, über den Medieneintritt eines Gehäuses der Vorrichtung axial einem zentralen Bereich der Leiteinrichtung zugeführt ist, in dem sich die einzelnen Spiralarme der Leiteinrichtung treffen. Insbesondere bei einer zusehends sich verengenden Medieneintrittsöffnung in Richtung der Leiteinrichtung lässt sich der Medienstrom bereits vor einer vergleichmäßigten Aufteilung in die Verteilkammern des Spiralabscheiders, der durch die Spiralarme begrenzt ist, anfänglich beschleunigen, was der weiteren Beschleunigung über die spiralförmigen Schaufeln der Leiteinrichtung in radialer Richtung nach außen hin gesehen zugutekommt.

Bei einer besonders bevorzugten Ausführungsform der erfindungsgemäßen Abscheidevorrichtung ist vorgesehen, dass zumindest teilweise die für die Leiteinrichtung verwendeten Spiralarme, vorzugsweise jedoch alle Spiralarme, paarweise einander benachbart Strömungsräume miteinander begrenzen, deren Verlauf ausgehend von dem zentralen Bereich der Leiteinrichtung nach außen hin divergierend, konvergierend oder mit parallel zueinander verlaufenden Spiralarmen im Wesentlichen gleichbleibend ist. Über die dahingehende Anordnung der einzelnen Spiralarme, divergierend, konvergierend oder parallel, lässt sich die Strömungsgeschwindigkeit mittels der Leiteinrichtung verlangsamen, beschleunigen oder im Wesentlichen gleichbleibend erhalten. Dies hat so keine Entsprechung im Stand der Technik.

Bei einer weiteren besonders bevorzugten Ausführungsform der erfindungsgemäßen Abscheidevorrichtung ist vorgesehen, dass die jeweiligen Spiralarme der Leiteinrichtung dem Kurvenverlauf einer sog. Fibonacci-Spirale, zumindest außerhalb ihres gemeinsamen, inneren Verbindungsbereichs, nachfolgen. Dergestalt ist für die Spiralform des jeweiligen Spiralarmes eine Art goldener Schnitt erreicht, was sich ausgesprochen günstig auf die energetische Strömungsführung des Medienstroms auswirkt.

Bei einer weiteren vorzugsweisen Ausgestaltung der Abscheidevorrichtung ist vorgesehen, dass alle Spiralarme der Leiteinrichtung gleich ausgebildet sind, insbesondere gleich lang und auch gleich hoch ausgebildet sind, so dass der derart rotationssymmetrisch aufgebaute Spiralabscheider sich in Längsrichtung gesehen in beliebiger Einbaurichtung innerhalb des Gehäuses der Abscheidevorrichtung unterbringen lässt. Ferner lässt sich ein dahingehender Spiralabscheider mit seinen feststehenden Spiralarmen als Leitschaufeln der Leiteinrichtung, beispielsweise in Form eines Kunststoff-Spritzgießteils, kostengünstig erhalten. Aufgrund des symmetrischen Aufbaus des Spiralabscheiders ist in jeder Richtung desselben eine gleich gute Austragrate für den Medienstrom sowie für die angestrebte Abscheiderate erreicht.

Bei einer weiteren besonders bevorzugten Ausführungsform der erfindungsgemäßen Abscheidevorrichtung ist darüber hinaus vorgesehen, dass die spiralförmig ausgebildete Leiteinrichtung in der Art eines Vorabscheiders ausgebildet ist, dem mindestens in Richtung des Medienstroms gesehen ein Luftfiltersystem nachfolgt. Etwaig noch nicht aus dem Medienstrom abgeschiedene Feststoffverschmutzungen, insbesondere in Form partikulärer Verschmutzungen, lassen sich dergestalt über das jeweils eingesetzte Filtermedium noch sicher abreinigen, bevor der aus der Abscheidevorrichtung herausgeführte Luft-Gasstrom an den jeweiligen Verbrennungsraum eines Verbrennungsmotors weitergeleitet wird, für die die erfindungsgemäße Abscheidevorrichtung die Luftfiltration übernimmt.

Das Luftfiltersystem kann bevorzugt ein Hauptfilterelement mit höherer Filterfeinheit aufweisen nebst einem darin konzentrisch oder nachgeschaltet angeordneten Sicherheitsfilterelement mit gröberer Filterfeinheit. Da das angesprochene Luftfilterelement in Form des Hauptfilterelements bei entsprechend von partikulärer Verschmutzung zugesetztem Filtermedium gegen ein Neuelement zu tauschen ist, würde selbst bei versehentlichem Weglassen des Hauptfilterelements bei seinem beabsichtigten Austausch das Sicherheitsfilterelement noch hinreichend eine Abreinigung im Betrieb der Abscheidevorrichtung von partikulärer Restverschmutzung vornehmen, ohne dass dergestalt der Verbrennungsmotor geschädigt werden könnte.

Dadurch, dass der Medienstrom abgereinigt von etwaigen Feststoffen nach Durchlaufen des Luftfiltersystems über einen Medienaustritt das Vorrichtungsgehäuse verlässt, der koaxial zum Medieneintritt im selben Gehäuse angeordnet ist, wobei der an die Abscheidevorrichtung angeschlossene Verbrennungsmotor in axialer Richtung gesehen durch Ansaugen den Medien- oder Gasstrom vonseiten des Lufteintritts zum Luftaustritt in axialer Richtung durch das Vorrichtungsgehäuse beschleunigt hindurchbewegt, wird die dahingehende axiale Strömungsführung durch die radiale Luftführung des Spiralvorabscheiders überlagert, so dass sich insgesamt, beginnend mit dem Spiralvorabscheider, idealisiert ein gleichmäßig spiralförmiger Medienstromverlauf im Inneren des Vorrichtungsgehäuses, insbesondere entlang dessen Innenwand, ergibt, so dass in besonders energetisch günstiger Weise eine Durchströmung der Abscheidevorrichtung als Ganzes erreicht ist. Der angesprochene spiralförmige Medienstromverlauf ist auch deshalb günstig, weil das sich in axialer Richtung innerhalb des Vorrichtungsgehäuses erstreckende Hauptfilterelement gleichfalls gleichförmig in spiralförmiger Weise umströmt wird, so dass dergestalt vergleichmäßigt aus dem Medienstrom die noch verbleibende partikuläre Feststoffbelastung durch das Filtermedium des Hauptfilterelements abgeschieden wird. Dergestalt kann sich das Hauptfilterelement auch vergleichmäßigt mit der partikulären Verschmutzung zusetzen und steht dergestalt für eine lange Einsatzdauer zur Verfügung. Insgesamt wird dabei die Vorrichtung regelmäßig über einen Medieneintritt mit einem mehr oder minder belasteten Medienstrom beschickt, der entsprechend mittels Spiralvorabscheider und Filtersystem abgereinigt einem Medienaustritt zugeführt wird, an dem der Verbrennungsmotor saugseitig mit seinen Verbrennungsräumen angeschlossen ist.

Dadurch, dass das Vorrichtungsgehäuse neben der Medienein- und -austrittsstelle noch mindestens eine weitere Öffnung für den Austritt der jeweils abgeschiedenen Feststoffe aufweist, lässt sich gezielt die Feststoffverschmutzung aus der Abscheidevorrichtung in die Umgebung abführen. Dabei kann die dahingehende Abgabeöffnung auch mit einem verschließbaren Abscheideventil versehen sein, um in diskreten Abständen oder quasi kontinuierlich die Abfuhr der jeweiligen Verschmutzung aus der Abscheidevorrichtung vorzunehmen. Im angesprochenen Rahmen der Luftfiltration für den Verbrennungsmotor handelt es sich dabei bei der partikulären Feststoffverschmutzung regelmäßig um Staub, welcher sich in der jeweiligen Umgebungsluft befindet, in der der Verbrennungsmotors, beispielsweise zum Antrieb einer Arbeitsmaschine eingesetzt ist.

Das Gehäuse kann bevorzugt mehrteilig ausgebildet sein, vorzugsweise voneinander wieder lösbare Gehäuseteile aufweisen, wobei ein Gehäuseteil bevorzugt die spiralförmig ausgebildete Leiteinrichtung aufweisen kann und das andere Gehäuseteil das vorstehend beschriebene Filtersystem. Dergestalt lassen sich in zeitnaher Weise die einzelnen Gehäuseteile voneinander separieren, wobei das eine Gehäuseteil mit dem Filtersystem an dem Verbrennungsmotor verbleiben kann, für einen Austausch der Filterelemente, insbesondere in Form des Luftfilter-Hauptelements, gegen ein Neuelement.

Im Folgenden wird die erfindungsgemäße Abscheidevorrichtung anhand eines Ausführungsbeispiels nach der Zeichnung näher erläutert. Dabei zeigen in prinzipieller und nicht maßstäblicher Darstellung die
- Fig. 1: in der Art einer Zusammenbauzeichnung die Abscheidevorrichtung als Ganzes;
- Fig. 2: in perspektivischer Ansicht eine Draufsicht auf den Spiralabscheider nach der Fig. 1;
- Fig. 3 und 4: eine stirnseitige Draufsicht auf den Spiralabscheider nach der Fig. 2, einmal mit divergierenden Spiralarmen, die entgegen dem Uhrzeigersinn gerichtet sind, und einmal im Uhrzeigersinn;
- Fig. 5: die Konstruktion eines Spiralarmes als sog. Fibonacci-Spirale für den Spiralabscheider nach den Fig. 2 bis 4; und

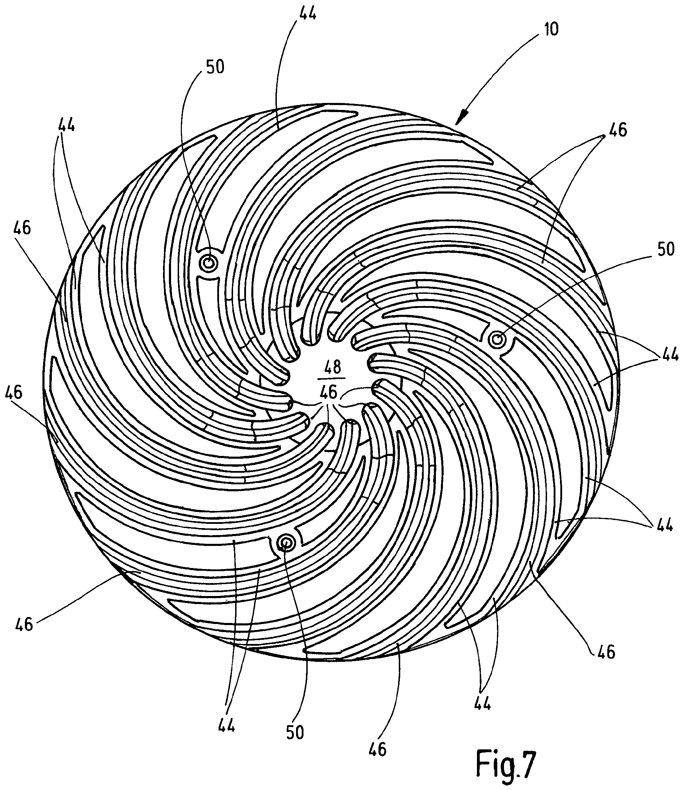

- Fig. 6 und 7: eine der Fig. 4 entsprechende Darstellung mit konvergierenden bzw. parallel zueinander angeordneten Spiralarmen.

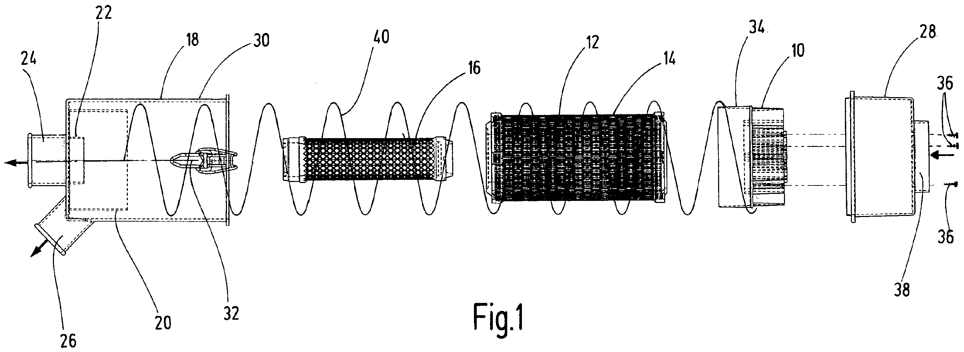

Die in der Fig. 1 gezeigte Abscheidevorrichtung weist als Vorabscheider einen Spiralabscheider 10 auf, an den sich in Strömungsrichtung eines Mediums, insbesondere in Form eines Gas- oder Luftstromes, ein Luftfiltersystem 12 anschließt mit einem Hauptfilterelement 14 und einem Sicherheitsfilterelement 16. Das Hauptfilterelement 14 ist hohlzylindrisch ausgebildet und weist ein Filtermedium mit höherer Filterfeinheit auf. In dem Hauptfilterelement 14 ist in konzentrischer Bauweise das Sicherheitsfilterelement 16 aufnehmbar, das wiederum hohlzylindrisch ausgebildet ist und gegenüber dem Hauptfilterelement 14 betreffend sein Filtermedium über eine gröbere Filterfeinheit verfügt. Beide Filterelemente 14, 16 sind in einem topfförmigen Gehäuseunterteil 18 aufnehmbar. Hierfür weist das Gehäuseunterteil 18 einen integrierten Aufnahmestutzen 20 für die endseitige Aufnahme des Hauptfilterelements 14 auf sowie einen weiteren integrierten Stutzen 22 für die Aufnahme des einen Endes des Sicherheitsfilterelements 16, wobei die Filterelemente in den stutzenförmigen Aufnahmen 20, 22 jeweils in abdichtender Weise stationär im Gehäuseunterteil 18 festgelegt sind. Am Boden des topfförmigen Gehäusesunterteils 18 ist ein stutzenförmiger Medienaustritt 24 vorhanden, der die durch die Abscheidevorrichtung generierte Reinluft einem nicht dargestellten üblichen Verbrennungsmotor einer Arbeitsmaschine oder eines sonstigen Fahrzeugs zuführt. Anstelle des Verbrennungsmotors könnte auch Kompressorluft entsprechend abgereinigt mittels der Abscheidevorrichtung generiert werden.

In Blickrichtung auf die Fig. 1 gesehen ist benachbart zu dem Medienaustritt 24 am unteren Ende und schräg verlaufend noch eine weitere Austrittsöffnung 26 vorhanden, die einen Austrag der Feststoffverschmutzung aus der Abscheidevorrichtung ermöglicht, insbesondere ist über die Austrittsöffnung 26 ein Staubaustritt aus der Luft zur Umgebung erreicht. Um eine sinnfällige Staubabscheidung über die stutzenförmige Austrittsöffnung 26 aus dem Gehäuseunterteil 18 zu erreichen, kann die dahingehende Austrittsöffnung 26 an ein nicht näher dargestelltes Abgassystem für den Verbrennungsmotor angeschlossen sein, indem im Betrieb des Verbrennungsmotors ein Unterdruck erzeugt wird, der den Staubaustritt aus der Austrittsöffnung 26 erleichtern hilft. Um einen ungewollten Schmutz- oder Feuchtigkeitseintrag von der Umgebung ins Innere des Gehäuseunterteils 18 vermeiden zu helfen, kann in der Austrittsöffnung 26 ein nicht näher dargestelltes Staubabscheideventil vorhanden sein, insbesondere in der Art eines federbelasteten Rückschlagventils, das im Betrieb der Vorrichtung und des Verbrennungsmotors unter Saugeinwirkung des Abgassystems in Richtung des freien Öffnungsquerschnitts der Austrittsöffnung 26 öffnet und in Richtung des Inneren des Gehäuseunterteils 18 in seine Schließstellung gelangt, beispielsweise wenn der Verbrennungsmotor außer Betrieb ist.

Der bereits vorgestellte Spiralabscheider 10 ist in einem deckelförmigen Gehäuseoberteil 28 aufnehmbar, dessen Innenseite mit einem vorgebbaren radialen Abstand den Außenumfang des Spiralabscheiders 10 umgibt. Das Gehäuseunterteil 18 mit dem Gehäuseoberteil 28 bildet das Gesamtgehäuse 30 der Abscheidevorrichtung aus. Ferner lässt sich in üblicher Weise über Spannverschlüsse 32, von denen in der Fig. 1 nur ein Spannverschluss dargestellt ist, das Gehäuseoberteil 28 in wieder lösbarer Weise an dem Gehäuseunterteil 18 festlegen. Für einen sinnfälligen Einbau der Abscheidevorrichtung in ein Gesamtluftzufuhr- oder -abgassystem steht zu erwarten, dass das Gehäuseunterteil 18 stationär im Bereich des nicht näher dargestellten Verbrennungsmotors in dessen Nähe angeordnet ist und bei Austauschvorgängen betreffend die Filterelemente dort verbleibt.

Das Gesamtgehäuse 30 wird insbesondere dann geöffnet werden, wenn das Hauptfilterelement 14 von Verschmutzungen zugesetzt gegen ein neues Element zu tauschen ist. Das angesprochene Sicherheitsfilterelement 16 kann dabei in seiner stutzenförmigen Aufnahme 22 im Gehäuseunterteil 18 verbleiben, so dass selbst für den Fall, dass versehentlich kein Neuelement für das Hauptfilterelement 14 eingewechselt wird, ein Abscheidebetrieb mit der Vorrichtung möglich ist, indem eben das Sicherheitsfilterelement 16 noch partikuläre Verschmutzungen aus dem Mediengasstrom ausscheidet, selbst wenn das Einsetzen des neuen Hauptfilterelements 14 vergessen wurde. Über das verbleibende Sicherheitsfilterelement 16 ist also in jedem Fall vermieden, dass durch etwaig verschmutzte Luft der an die Abscheidevorrichtung angeschlossene Verbrennungsmotor geschädigt wird.

Der Spiralabscheider 10 weist auf seiner dem Hauptfilterelement 14 zugewandten Seite gleichfalls eine topfförmige Aufnahme 34 auf, in die das Hauptfilterelement 14 mit seiner dem Spiralabscheider 10 zugewandten Endseite in abdichtender Weise einsetzbar ist. Des Weiteren ist der Spiralabscheider 10 über drei Eingriffsschrauben 36, die von der freien Stirnseite her das Gehäuseoberteil 28 durchgreifen, an diesem Gehäuseoberteil 28 festgelegt. Die mögliche jeweilige Einschraubstrecke ist in der Fig. 1 strichliniert angegeben. Des Weiteren weist das Gehäuseoberteil 28 an seiner nach außen hin weisenden freien Stirnseite einen Medieneintritt 38 in Form eines Hohlstutzens auf.

Demgemäß findet ein Medien- oder Lufteintritt über den Medieneintritt 38 des Gehäuseoberteils 28 statt, wobei der Lufteintritt gemäß der Pfeildarstellung in axialer Richtung zur Längsachse der Gesamt-Abscheidevorrichtung erfolgt. Durch den Spiralabscheider 10 wird der dahingehende axiale Lufteintritt in eine Rotationsbewegung nach außen hin gebracht und die Überlagerung dieser Luft-Rotationsbewegung mit der axialen Eintrittsströmung der Luft über den Medieneintritt 38 bewirkt, dass der Medien- oder Luftstrom spiralförmig entlang der Spiralbahn 40 sich zu der Innenwand des Gesamtgehäuses 30 bewegt. Um einen ungestörten Spiralbahnverlauf 40 für den Luftstrom sicherstellen zu können, weisen sowohl der Spiralabscheider 10 als auch das Hauptfilterelement 14 in radialer Richtung gesehen einen vorgebbaren Abstand zu dem Gehäuseoberteil 28 bzw. zu dem Gehäuseunterteil 18 auf. Sofern der angesprochene Luftstrom mit partikulären Feststoffverschmutzungen versehen ist, wie Staub, wird durch die gezeigte Spiralführung 40 die mit Staub beladene Luft beschleunigt und die Luft wird an der Innenwand des Gesamtgehäuses 30 weitergeleitet in Richtung des Medienaustritts 24, wobei die Feststoffverschmutzung in Form des angesprochenen Staubs durch Reibung an der Innenwand des Gesamtgehäuses 30 abgebremst und dann über das nicht näher dargestellte Staubaustrittsventil an der Austrittsöffnung 26 aus dem Gesamtgehäuse 30, vorzugsweise in das Abgassystem des Fahrzeugs, abgeschieden wird. Die verbleibende Restluft wird dann weiter abgereinigt durch das Hauptfilterelement 14 und gelangt dergestalt in Form von Reinluft über den Medienaustritt 24 zu den Brennkammern des jeweils angeschlossenen Verbrennungsmotors.

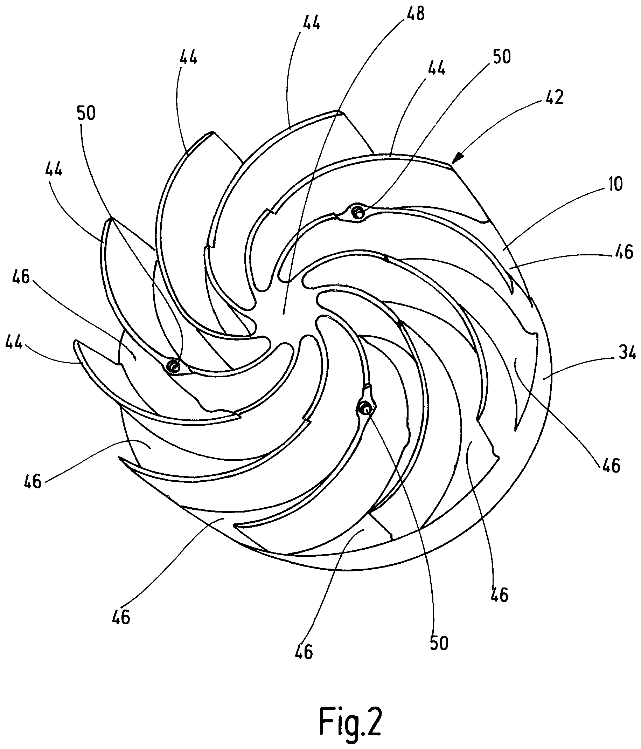

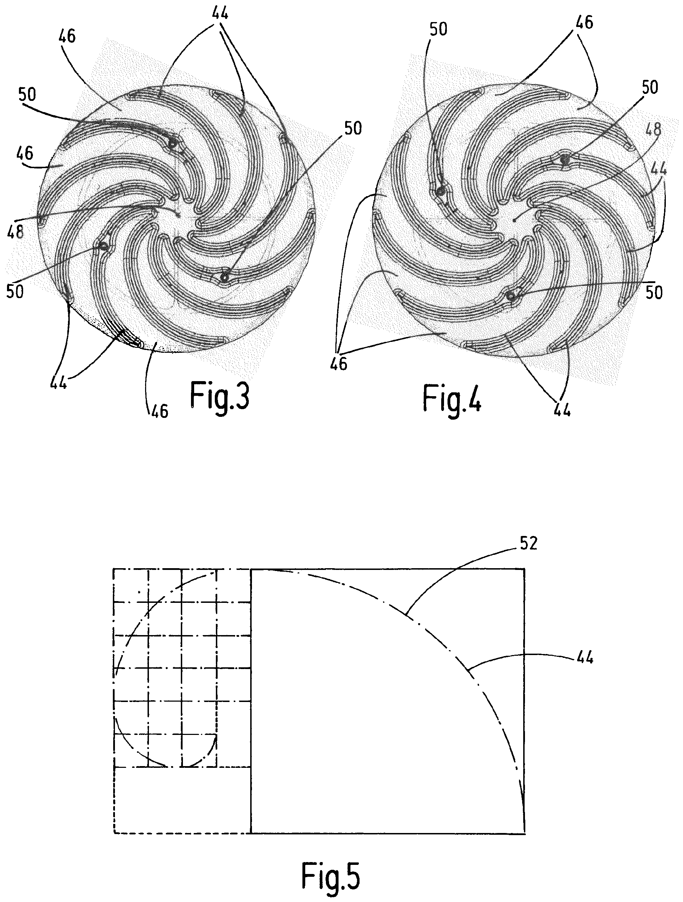

Die Fig. 2 zeigt nun den Spiralabscheider 10 in perspektivischer stirnseitiger Ansicht. Der Spiralabscheider 10 weist eine Spiralleiteinrichtung 42 in Form einzelner Spiralarme 44 auf, die auf der stirnseitigen Oberfläche der darunterliegenden topfförmigen Aufnahme 34 für das Hauptfilterelement 14 sitzen. Die dahingehende Gestaltung kann einstückig sein, insbesondere kann das zylindrische Aufnahmeteil 34 in Form eines Kunststoff-Spritzgießteils als einstückiger Bestandteil mit der Spiralleiteinrichtung 42 mit den einzelnen Spiralarmen 44 hergestellt sein. Die einzelnen Spiralarme 44, wie dies insbesondere auch die stirnseitigen Ansichten nach den Fig. 3 und 4 ergeben, begrenzen paarweise einander benachbart gegenüberliegend radial nach außen sich erweiternde Strömungsräume 46, die den Medien- oder Luftstrom radial von innen nach außen führen. Die dahingehende Luftführung kann von innen nach außen über die radial sich erweiternden Strömungsräume 46 in beschleunigter Weise erfolgen.

Die einzelnen Spiralarme 44 sind nach innen hin in einem gemeinsamen Bereich 48 zusammengeführt und die über den Medieneintritt 38 axial zugeführte Roh- oder Umgebungsluft - mehr oder minder staubhaltig - trifft auf die zylindrische Platte, die den genannten gemeinsamen Bereich 48 bildet, auf, bevor sie gleichermaßen portioniert in die Strömungsräume 46 weitergeleitet und nach außen hin radial bewegt wird. Wie die Fig. 2 weiter zeigt, weisen zuordenbare Spiralarme 44 gleichermaßen voneinander beabstandete Eingriffsgewinde 50 für den Eingriff der jeweils zuordenbaren Eingriffsschrauben 36 auf, um dergestalt die Spiralleiteinrichtung 42 unter Bildung des Spiralabscheiders 10 mit dem deckelförmigen Gehäuseoberteil 28 zu verbinden.

Wie insbesondere die Fig. 3 und 4 zeigen, können die Spiralarme 44 linksdrehend bzw. rechtsdrehend auf der topfförmigen Aufnahme 34 angeordnet sein. Ferner schließen alle Spiralarme 44 mit ihrem jeweils freien Ende bündig in einer gemeinsamen Ebene mit dem zylindrischen Außenumfang der topfförmigen Aufnahme 34 ab. Sofern der Medieneintritt 38 beispielsweise über einen konisch sich in Richtung des Spiralabscheiders 10 verjüngenden Beschleunigungsabschnitt verfügt, kann die vom Verbrennungsmotor über den Medienaustritt 24 beschleunigt angesaugte Luft entsprechend beschleunigt auf den gemeinsamen Verbindungsbereich 48 des Spiralabscheiders 10 eingangsseitig auftreffen, um dergestalt eine Anfangsbeschleunigung zu erhalten, was sich günstig auf das Abscheideverhalten für die partikuläre Verschmutzung aus dem Medienstrom auswirkt. Die Volumenmenge des mittels des Spiralabscheiders 10 zu beschleunigenden Gas- oder Luftstroms ist durch die Größe der Ansaugöffnung, also durch den Medieneintritt 38, ebenso einstellbar wie über die axiale Höhe der schaufelartig ausgebildeten Spiralarme 44 der Spiralleiteinrichtung 42. Die Geschwindigkeit des Medien- oder Gasstroms wird wiederum durch die Anzahl von Spiralarmen 44 vorgegeben sowie über deren Länge 52, die gemäß der Darstellung nach der Fig. 5 sich durch die Ausgestaltung des jeweiligen Spiralarmes 44 in der Art einer Fibonacci-Spirale ergibt, bei der der sog. goldene Schnitt konstruktiv realisiert ist. Da die Spiralarme 44 an ihren einander zugewandten Enden in einem gemeinsamen Bereich 48 ausmünden, ist zum Inneren hin nicht die gesamte Fibonacci-Spirale realisiert.

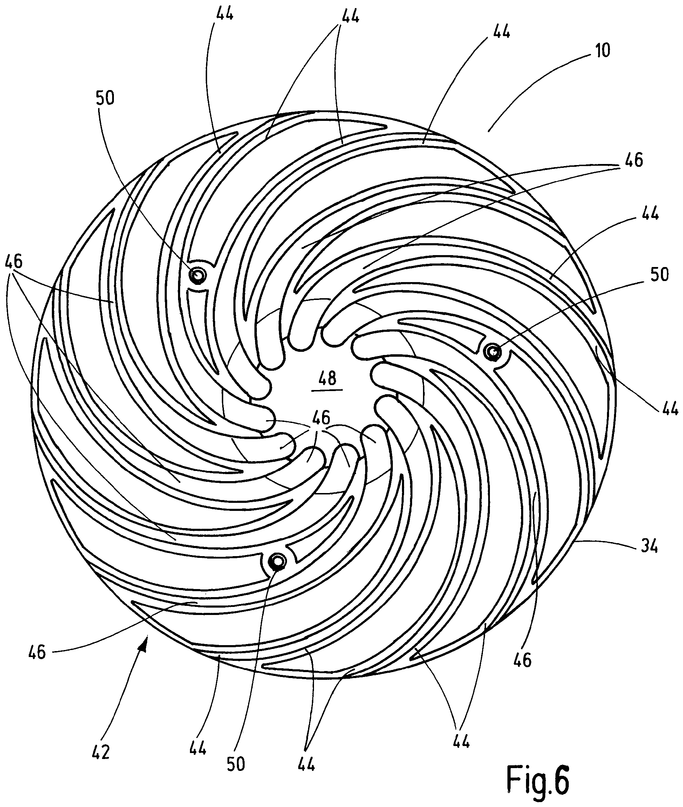

Wie die Darstellungen nach den Fig. 2 bis 4 zeigen, sind die einzelnen Spiralarme 44 divergierend angeordnet, d.h. ausgehend von dem mittigen Verbindungsbereich 48 erweitern sich die einzelnen Strömungsräume 46, die jeweils begrenzt sind von Paaren von Spiralarmen 44 von innen nach außen, so dass sich dergestalt die Strömung in diese Richtung verlangsamen kann, sofern der Anwendungsfall, beispielsweise abhängig von der partikulären Verschmutzung, dies vorgibt. Andererseits können bei einer konvergierenden Anordnung der Spiralarme 44, wie in Fig. 5 gezeigt, wiederum ausgehend vom Mittenbereich 48, die Strömungsräume 46 nach außen hin sich verjüngen, was zu einer Erhöhung der Strömungsgeschwindigkeit von innen nach außen führt. Bei der Ausführungsform nach der Fig. 6 hingegen sind die einzelnen Spiralarme 44 paarweise im Wesentlichen parallel zueinander verlaufend angeordnet, so dass von innen nach außen gesehen gleichbleibende Strömungsräume 46 mit insoweit gleichbleibender Strömungsgeschwindigkeit erhalten sind.

Die zylindrische Verlängerung des Spiralabscheiders 10 in Form der topfförmigen Aufnahme 34 im Anschluss an die einzelnen Spiralarme 44 oder Spiralschaufeln dient zur radialen Führung des mit Feststoffen beladenen Gas- oder Luftstroms in Längsrichtung der zylindrischen Gehäuseinnenwand des Gesamtgehäuses 30. Durch den sich hieraus ergebenden volumetrischen Unterschied erfolgt das Ausfällen des Feststoffes regelmäßig in Form von Staub aus dem Gas-Luftstrom, wobei dann die Feststoffe, bedingt durch den Ansaugvorgang des Verbrennungsmotors an der Innenseite der Gehäusewand, bis zu der Ablagerungsstelle in Form der Austrittsöffnung 26 im Gehäuse 30 transportiert und dort in die Umgebung abgeschieden werden. Der Spiralabscheider 10 nach der Erfindung kann in dem beschriebenen Luftfiltersystem 12 als Vorabscheider eingesetzt werden; gefolgt von einem radial oder axial abdichtenden Filterelement, insbesondere in Form des Hauptfilterelements 14, welches im Gehäuse 30 von Schmutzpartikeln, wie Staub, umströmt resp. von Luft durchströmt wird. Dabei kommt es zu einer vollständigen Trennung des Partikel/Gas-Gemisches und Reinluft kann über den Medienaustritt 24 des Gehäuses 30 den Verbrennungskammern des Verbrennungsmotors zugeführt werden.

## Patentansprüche

1. Abscheidevorrichtung zum Abscheiden von Verschmutzungen in Form von Feststoffen, aus einem gasförmigen Medienstrom, wie Luft, mit einem Spiralabscheider (10), der eine spiralförmig ausgebildete Leiteinrichtung (42) aufweist, und einem hohlzylindrischen Filterelement (14), die in einem eine zylindrische Gehäuseinnenwand aufweisenden Gehäuse (30) angeordnet sind, wobei der Medienstrom der Leiteinrichtung (42) zuführbar ist und dadurch eine zumindest teilweise Abtrennung der jeweiligen Verschmutzung aus dem Medienstrom bewirkt, wobei die Leiteinrichtung (42) mehrere Spiralarme (44) aufweist, die paarweise einander benachbart gegenüberliegend radial verlaufende Strömungsräume (46) derart begrenzen, dass der Medienstrom radial nach außen geführt, sich spiralförmig zu der Innenwand des Gehäuses (30) bewegt, wobei die Abscheidevorrichtung derart eingerichtet ist, dass durch die Spiralführung (40) der Medienstrom beschleunigt und an der Innenwand des Gehäuses (30) in Richtung eines Medienaustritts (24) weitergeleitet wird, dass dabei die Feststoffverschmutzung durch Reibung an der Innenwand des Gehäuses (30) abgebremst und aus dem Gehäuse (30) abgeschieden wird und dass das verbleibende Gas dann durch das Filterelement (14) weiter abgereinigt wird, und wobei das Filterelement (14) in radialer Richtung gesehen einen vorgebbaren Abstand zu dem Gehäuse (30) aufweist, **dadurch gekennzeichnet, dass** die einzelnen Spiralarme (44) auf einer stirnseitigen Oberfläche einer darunterliegenden topfförmigen Aufnahme (34) sitzen, in die das Filterelement (14) eingesetzt ist, und dass der Spiralabscheider (10) in radialer Richtung gesehen einen vorgebbaren Abstand zu dem Gehäuse (30) aufweist.

2. Abscheidevorrichtung nach Anspruch 1, **dadurch gekennzeichnet, dass** der Medienstrom über einen Medieneintritt (38) eines Gehäuses (30) der Vorrichtung axial einem zentralen Bereich (48) der Leiteinrichtung (42) zugeführt ist, in dem sich die einzelnen Spiralarme (44) treffen.

3. Abscheidevorrichtung nach Anspruch 1 oder 2, **dadurch gekennzeichnet, dass** zumindest teilweise die für die Leiteinrichtung (42) verwendeten Spiralarme (44), vorzugsweise jedoch alle Spiralarme (44), paarweise einander benachbart Strömungsräume (46) miteinander begrenzen, deren Verlauf ausgehend von dem zentralen Bereich (48) der Leiteinrichtung (42) nach außen hin divergierend, konvergierend oder mit parallel zueinander verlaufenden Spiralarmen (44) gleichbleibend ist.

4. Abscheidevorrichtung nach einem der vorstehenden Ansprüche, **dadurch gekennzeichnet, dass** die einzelnen Spiralarme (44) nach innen hin in dem zentralen Bereich (48) zusammengeführt sind, und dass die über den Medieneintritt (38) axial zugeführte Roh- und/oder Umgebungsluft auf eine zylindrische Platte trifft, die den zentralen Bereich (48) bildet, bevor sie gleichermaßen portioniert in die Strömungsräume (46) weitergeleitet und nach außen hin radial bewegt ist.

5. Abscheidevorrichtung nach einem der vorstehenden Ansprüche, **dadurch gekennzeichnet, dass** durch die Spiralführung (40) des Medienstroms mittels der Spiralarme (44) der Leiteinrichtung (42) die Feststoffe sich am Inneren des Gehäuses (30) abscheiden.

6. Abscheidevorrichtung nach einem der vorstehenden Ansprüche, **dadurch gekennzeichnet, dass** die jeweiligen Spiralarme (44) der Leiteinrichtung (42) dem Kurvenverlauf einer Fibonacci-Spirale zumindest außerhalb ihres gemeinsamen Verbindungsbereichs (48) nachfolgen.

7. Abscheidevorrichtung nach einem der vorstehenden Ansprüche, **dadurch gekennzeichnet, dass** alle Spiralarme (44) der Leiteinrichtung (42) gleich ausgebildet, insbesondere gleich lang und auch gleich hoch ausgebildet sind.

8. Abscheidevorrichtung nach einem der vorstehenden Ansprüche, **dadurch gekennzeichnet, dass** die Leiteinrichtung (42) in der Art eines Vorabscheiders (10) ausgebildet ist, dem mindestens in Richtung des Medienstroms gesehen ein Luftfiltersystem (12) nachfolgt.

9. Abscheidevorrichtung nach einem der vorstehenden Ansprüche, **dadurch gekennzeichnet, dass** in Richtung des Medienstroms gesehen einem Hauptfilterelement (14) mit höherer Filterfeinheit einem Sicherheitsfilterelement (16) mit gröberer Filterfeinheit vorgeschaltet ist.

10. Abscheidevorrichtung nach einem der vorstehenden Ansprüche, **dadurch gekennzeichnet, dass** der Medienstrom, abgereinigt von etwaigen Feststoffen, wie Staub, nach dem Luftfiltersystem (12) über einen Medienaustritt (24) das Gehäuse (30) verlässt, der koaxial zum Medieneintritt (38) im Gehäuse (30) angeordnet ist.

11. Abscheidevorrichtung nach einem der vorstehenden Ansprüche, **dadurch gekennzeichnet, dass** das Gehäuse (30) mindestens eine weitere Öffnung (26) für den Austritt des jeweils abgeschiedenen Feststoffes aufweist.

12. Abscheidevorrichtung nach einem der vorstehenden Ansprüche, **dadurch gekennzeichnet, dass** das Gehäuse (30) mehrteilig ausgebildet ist, vorzugsweise voneinander wieder lösbare Gehäuseteile (18, 28) zum einen für das Luftfiltersystem (12) und zum anderen für die Leiteinrichtung (42) aufweist.

## Claims

1. Separation device for separating contamination in the form of solids from a gaseous medium, such as air, with a spiral separator (10), which comprises a guide apparatus (42) in the form of a spiral, and a hollow, cylindrical filter element (14), which are arranged in a housing (30) comprising a cylindrical housing inner wall (30), the media flow being able to be conveyed to the guide apparatus (42), thus causing an at least partial separation of the respective contamination from the media flow, the guide apparatus (42) comprising a plurality of spiral arms (44), in pairs, adjacent to and opposite one another, which delimit radially extending flow chambers (46) such that the media flow is guided radially outwards and moves in a spiral manner with respect to the inner wall of the housing (30), the separation device being set up such that the media flow is accelerated by the spiral guidance (40) and passed along the inner wall of the housing (30) in the direction of a media outlet (24), such that the solid contamination is slowed down during this operation due to friction on the inner wall of the housing (30) and separated from the housing (30) and such that the remaining gas is then further purified by the filter element (14), said filter element (14), when viewed in the radial direction, being at a pre-definable distance from the housing (30), **characterised in that** the individual spiral arms (44) sit on one end surface of an underlying cup-shaped receptacle (34), in which the filter element (14) is inserted, and **in that** the spiral separator (10), when viewed in the radial direction, is at a pre-definable distance from the housing (30).

2. Separation device according to claim 1, **characterised in that** the media flow is conveyed axially via a media inlet (38) of a housing (30) of the device to a central region (48) of the guide apparatus (42), in which the individual spiral arms (44) meet.

3. Separation device according to either claim 1 or claim 2, **characterised in that** the spiral arms (44) used for the guide apparatus (42), at least partially, but preferably all spiral arms (44), together, adjacent to one another in pairs, delimit flow chambers (46), these extending outwards from the central region (48) of the guide apparatus (42), by diverging, converging or remaining the same as spiral arms (44) running parallel to one another.

4. Separation device according to any one of the preceding claims, **characterised in that** the individual spiral arms (44) converge towards the inside in the central region (48), and **in that** the dirty and/or ambient air conveyed axially via the media inlet (38) comes into contact with a cylindrical plate, which forms the central region (48), before it is passed into the flow chambers (46) in equal portions and moved radially outwards.

5. Separation device according to any one of the preceding claims, **characterised in that** the solids separate on the inside of the housing (30) as a result of the spiral guidance (40) of the media flow by means of the spiral arms (44) of the guide apparatus (42).

6. Separation device according to any one of the preceding claims, **characterised in that** the respective spiral arms (44) of the guide apparatus (42) follow the curve of a Fibonacci spiral at least outside their common connection region (48).

7. Separation device according to any one of the preceding claims, **characterised in that** all spiral arms (44) of the guide apparatus (42) have the same shape, and in particular are the same length and also the same height.

8. Separation device according to any one of the preceding claims, **characterised in that** the guide apparatus (42) is designed as a form of preliminary separator (10), followed, at least when viewed in the direction of the media flow, by an air filter system (12).

9. Separation device according to any one of the preceding claims, **characterised in that**, when viewed in the direction of the media flow, a main filter element (14) with a higher filter grade is connected upstream of a safety filter element (16) with a coarser filter grade.

10. Separation device according to any one of the preceding claims, **characterised in that** the media flow, purified of any solids, such as dust, leaves the housing (30) after the air filter system (12) by means of a media outlet (24), which is arranged coaxially with respect to the media inlet (38) in the housing (30).

11. Separation device according to any one of the preceding claims, **characterised in that** the housing (30) comprises at least one further opening (26) for discharge of the respective separated solid.

12. Separation device according to any one of the preceding claims, **characterised in that** the housing (30) is designed in multiple parts, preferably comprising housing parts (18, 28) that can be detached from one another again, firstly for the air filter system (12) and secondly for the guide apparatus (42).

## Revendications

1. Installation de séparation pour séparer des impuretés sous forme de matières solides d'un courant de fluides gazeux, comme de l'air, comprenant un séparateur (10) spiral, qui a un dispositif (42) de conduite, constitué en forme de spirale, et un élément (14) de filtre cylindrique creux, qui sont disposés dans une enveloppe (30) ayant une paroi intérieure cylindrique, le courant de fluides pouvant être apporté au dispositif (42) de conduite et ainsi provoquer une séparation au moins en partie de l'impureté respective du courant de fluides, le dispositif (42) de conduite ayant plusieurs bras (44) en spirale, qui, en étant voisins l'un de l'autre par paire, délimitent des espaces (46) d'écoulement s'étendant radialement en opposition, de manière à ce que le courant de fluides, conduit vers l'extérieur radialement, se déplace en forme de spirale vers la paroi intérieure de l'enveloppe (30), l'installation de séparation étant conçue de manière à ce que, par la conduite (40) en spirale, le courant de fluides soit accéléré et acheminé sur la paroi intérieure de l'enveloppe (30) en direction d'une sortie (24) de fluides, de manière à ce qu'ainsi une impureté de matière solide soit freinée par frottement sur la paroi intérieure de l'enveloppe (30) et soit séparée de l'enveloppe (30) et de manière à ce que le gaz restant soit épuré davantage par l'élément (14) de filtre, et dans lequel l'élément (14) de filtre a, considéré dans la direction radiale, une distance pouvant être donnée à l'avance à l'enveloppe (30), **caractérisée en ce que** les divers bras (44) en spirale sont sur une surface, du côté frontal, d'un logement (34) en forme de cuvette sous-jacente, dans lequel est inséré l'élément (14) de filtre et **en ce que** le séparateur (10) spiral a, considéré dans la direction radiale, une distance pouvant être donnée à l'avance à l'enveloppe (30).

2. Installation de séparation suivant la revendication 1, **caractérisée en ce que** le courant de fluides est apporté, par une entrée (38) pour des fluides d'une enveloppe (30) de l'installation, axialement dans une partie (48) centrale du dispositif (42) de conduite, dans laquelle les divers bras (44) en spirale se rencontrent.

3. Installation de séparation suivant la revendication 1 ou 2, **caractérisée en ce que** au moins en partie, les bras (44) spirales, utilisés pour le dispositif (42) de conduite, de préférence toutefois tous les bras (44) en spirale, délimitent entre eux des espaces (46) d'écoulement voisins les uns des autres par paire, dont le tracé à partir de la partie (48) centrale du dispositif (42) de conduite est constant en divergeant vers l'extérieur, en convergeant ou en ayant des bras (44) en spirale s'étendant parallèlement entre eux.

4. Installation de séparation suivant l'une des revendications précédentes, **caractérisée en ce que** les divers bras (44) en spirale sont rassemblés vers l'intérieur dans la partie (48) centrale et **en ce que** l'air brut et/ou ambiant, apporté axialement par l'entrée (38) pour des fluides, rencontre une plaque cylindrique qui forme la partie (48) centrale, avant d'être, en étant réparti de la même façon en portions, acheminé dans les espaces (46) d'écoulement, et être déplacé radialement vers l'extérieur.

5. Installation de séparation suivant l'une des revendications précédentes, **caractérisée en ce que** les matières solides se séparent à l'intérieur de l'enveloppe (30) par la conduite (40) en spirale du courant de fluides au moyen des bras (44) en spirale du dispositif (42) de conduite.

6. Installation de séparation suivant l'une des revendications précédentes, **caractérisée en ce que** les bras (44) en spirale respectifs du dispositif (42) de conduite suivent le tracé de courbe d'une spirale de Fibonacci au moins à l'extérieur de leur partie (48) de liaison commune.

7. Installation de séparation suivant l'une des revendications précédentes, **caractérisée en ce que** tous les bras (44) en spirale du dispositif (42) de conduite sont constitués pareillement, en ayant notamment la même longueur et également la même hauteur.

8. Installation de séparation suivant l'une des revendications précédentes, **caractérisée en ce que** le dispositif (42) de conduite est constitué à la manière d'un pré-séparateur (10), auquel fait suite, au moins considéré dans le sens du courant de fluides, un système (12) de filtration de l'air.

9. Installation de séparation suivant l'une des revendications précédentes, **caractérisée en ce que**, considéré dans le sens du courant de fluides, un élément (14) de filtration principale ayant une plus grande finesse de filtre est monté en amont d'un élément (16) de filtration de sécurité ayant une finesse de filtre plus grossière.

10. Installation de séparation suivant l'une des revendications précédentes, **caractérisée en ce que** le courant de fluides épuré d'éventuelles matières solides, comme de la poussière, quitte, après le système (12) de filtration de l'air, l'enveloppe (30) par une sortie (24) pour des fluides, qui est co-axiale à l'entrée (38) pour des fluides de l'enveloppe (30).

11. Installation de séparation suivant l'une des revendications précédentes, **caractérisée en ce que** l'enveloppe (30) a au moins une autre ouverture (26) pour la sortie de la matière solide séparée.

12. Installation de séparation suivant l'une des revendications précédentes, **caractérisée en ce que** l'enveloppe (30) est constituée en plusieurs parties, en ayant de préférence des parties (18, 28) d'enveloppe pouvant être reséparées les unes des autres, d'une part pour le système (12) de filtration de l'air et d'autre part pour le dispositif (42) de conduite.
